# EUROPEAN PATENT SPECIFICATION

(11) **EP 1 969 845 B1**
(45) Date of publication and mention of the grant of the patent: **03.12.2014**
(21) Application number: 06840228.8
(22) Date of filing: 13.12.2006
(51) Int. Cl.: H04N 7/167

(54) **METHOD AND APPARATUS FOR MANAGING CONTENT IN A MOBILE DEVICE**
VERFAHREN UND VORRICHTUNG ZUR INHALTSVERWALTUNG IN EINEM MOBILGERÄT
PROCEDE ET APPAREIL PERMETTANT DE GERER UN CONTENU DANS UN DISPOSITIF MOBILE

(30) Priority: 20.12.2005 US 311942
(43) Date of publication of application: 17.09.2008
(73) Proprietor: Motorola Mobility LLC, Libertyville, IL 60048 (US)
(72) Inventor: AERRABOTU, Naveen, Gurnee, Illinois 60031 (US); ABU-AMARA, Hosame H., Round Lake, Illinois 60073 (US); JAGADESAN, Balakumar, Glendale Heights, Illinois 60139 (US)
(74) Representative: Boult Wade Tennant
(86) International application number: PCT/US2006/061988
(87) International publication number: WO 2007/076264

(56) References cited:
- EP-A1- 1 465 426
- WO-A1-00/31964
- US-A1- 2004 196 972

## Description

### FIELD

This invention relates generally to managing data. More particularly, embodiments relate to managing content protected by digital rights management techniques in a communication device.

### DESCRIPTION OF THE RELATED ART

Digital rights management ("DRM") may be considered an umbrella term that refers to technical methods used to control or restrict the use of digital media content on electronic devices. For example, one technique is forward locking. In forward locking, the digital media is encoded so that when it is downloaded to an electronic device, it cannot be copied from the electronic device. Another technique is combined delivery. This technique involves defining how the content is to be used (or copied). These restrictions are then downloaded with the content to an electronic device. The restrictions then govern how the content is to be used by the user. Yet another technique is separate delivery. In this technique, the content is delivered in an encrypted form separately from a decryption key, which is pushed to the electronic device together with the set of rights. This means that the content can be copied freely, but can't be used unless the user has the decryption key and rights, which will be pushed directly from the content provider to the electronic device.

Typical content from a provider may involve a large amount of data such as a high-resolution image. However, the user may not be interested in viewing the entire content at the highest resolution. A viewer may only be interested in viewing a section of the image at high resolution. Current DRM techniques do not provide a mechanism to control a property of the image.

PCT application publication no. WO 00/31964 describes a method and device for partial encryption and progressive transmission of images. A first section of the image file is compressed at reduced quality without decryption and a second section of the image file is encrypted. Users having access to appropriate decryption keywords can decrypt this second section. The first section together with the decrypted second section can then be viewed as a full quality image. The storage and bandwidth requirements can thus be reduced for partially encrypted images since different versions of the same image do not need to be stored if different users are to have access to different quality of the same image.

EP patent application publication no. EP-A-1465426 and US patent application publication no. 2004/0196972 describes a DRM engine which divides multimedia content into service level layers, encrypts at least some of the layers and offers access to the encrypted layers by permission. One of the layers may be left unencrypted to allow free browsing of a low quality service level.

### Summary

In accordance with the present invention, there is provided a method of managing digital rights associated with received content in a mobile device, an apparatus for managing content in a mobile device and a method of providing content as claimed in the accompanying claims.

An embodiment generally relates to a method of managing content in a mobile device. The method includes receiving content from a provider, where the content includes at least one file segmented into plurality of segments and at least one segment being encoded with a digital rights management (DRM) technique. The method also includes determining DRM status each segment of the plurality of segments and retrieving a DRM permission in response to the at least one segment being encoded by a DRM technique. The method further includes applying the DRM permission to the at least one segment of the content and displaying the least one segment.

Another embodiment generally pertains to an apparatus for managing content in a mobile device. The apparatus includes a display configured to display image files, a network interface configured to interface with a wireless network and a digital rights management (DRM) module configured to manage digital rights associated with received content. The apparatus also includes a controller configured to interface with the display, network interface, and the DRM module. The controller is also configured to determine a DRM status of received content by using the DRM module and to display the content in response to the DRM status of the received content on the display, where the content comprises at least one file partitioned into plurality of tiles. The controller is further configured to retrieve a DRM permission for at least one tile of the content being encoded by a DRM technique through the network interface and to apply the DRM permission to the at least one tile of the content using the DRM module.

Yet another embodiment generally relates to a method of providing content. The method includes providing content to a plurality of users, where the content comprises of at least one file, and subdividing the at least one file into a plurality of sections. The method also includes applying a digital rights management (DRM) encoding technique to each of the sections and packaging the at least one section encoded with the DRM technique and the unencoded sections of the plurality of sections as the content.

Accordingly, embodiments generally assist users in managing content in a communication device. More particularly, embodiments may display received DRM encoded content at a base resolution. The user may then retrieve the DRM permission to view certain sections of the received content with a different image property. Accordingly, a user may alter the image properties of sections of the received content and thereby permitting greater control of the received content.

### BRIEF DESCRIPTION OF THE DRAWINGS

Various features of the embodiments can be more fully appreciated, as the same become better understood with reference to the following detailed description of the embodiments when considered in connection with the accompanying figures, in which:
FIG. 1 illustrates a block diagram of an exemplary communication device where an embodiment may be practiced;
FIG. 2 illustrates a block diagram of an exemplary system where another embodiment may be practiced;
FIG. 3 illustrates an exemplary DRM structure in accordance with yet another embodiment.
FIG. 4 illustrates a flow diagram implemented by yet another embodiment; and
FIG. 5 illustrates a flow diagram implemented by yet another embodiment.
FIG. 6 illustrates a flow diagram implemented by yet another embodiment.

### DETAILED DESCRIPTION OF EMBODIMENTS

For simplicity and illustrative purposes, the principles of the present invention are described by referring mainly to exemplary embodiments thereof. However, one of ordinary skill in the art would readily recognize that the same principles are equally applicable to, and can be implemented in, all types of wireless communication systems, and that any such variations do not depart from the true scope of the present invention as defined in the appended claims. Moreover, in the following detailed description, references are made to the accompanying figures, which illustrate specific embodiments. Electrical, mechanical, logical and structural changes may be made to the embodiments without departing from the spirit and scope of the present invention. The following detailed description is, therefore, not to be taken in a limiting sense and the scope of the present invention is defined by the appended claims and their equivalents.

Embodiments generally relate to managing digital rights management (DRM) files on a communication device, e.g., a cellular telephone, a personal digital device or other similar device. More particularly, a content provider may provide DRM encoded content to users, where the DRM rights may be applied to sections of the original content, e.g., an image file. For example, the JPEG 2000 provides for breaking up a file into multiple sections (or partitions, segments, tiles, etc). These sections may be encoded the same or encoded so that one section differs from another according to the JPEG 2000 specification. Moreover, these sections may also be further encoded with other DRM techniques or other cryptographic techniques such as public/private key pairs.

In some embodiments, the content provider may partition a file into multiple tiles. The content provider may provide alternate tiles for each tile. The alternate tiles may be encoded with DRM and/or cryptographic techniques. The content provider may then add information to the metadata associated with each tile, where the information includes a linkage or reference (indirectly or directly) to the associated alternate tiles. Accordingly, the content provider may package the multiple tiles with the alternate tiles as the content for a user. When the user displays the content, the alternate tiles may be displayed instead of the associated tile because of the reference data in the metadata. Alternatively, the content provider may package the multiple tiles replaced with the alternative tiles as the content.

The metadata may also be configured to include identifier data to associate with a respective DRM permission or key. The identifier data may be used by the user to request the appropriate DRM permission. In other embodiments, the metadata may include the DRM permission with the content. The content provider may then receive payment information and related information from the user while the user has instant access to the DRM encoded tiles.

Yet another embodiment relates to a method of a mobile device receiving content from a provider. The mobile device executing an associated application for the received content may display the content according to the DRM permissions. For example, a small number of sections of the content may not be DRM encoded while other sections may be DRM encoded. Thus, the mobile device may display the non-DRM encoded sections while blocking or obscuring the DRM encoded sections. For the DRM encoded sections, user may optionally invoke the mobile device to retrieve the DRM permissions and decode the DRM encoded sections of the content.

In another embodiment, a communication device may be configured to receive content from a provider. The communication device may determine whether the content is DRM protected. If the content is not protected, the communication device may decode the received content. Otherwise, the communication device retrieves the DRM permission the sender has set for the received content. The communication device is then configured to decode the picture at the base resolution. The communication device may then determine from the received DRM permissions the next course of action. For example, the sender may have set the DRM rights for the receiver to view only certain sections of the file. In other instances, the sender may have set the DRM rights for the receiver to display the received content with better image properties (e.g., resolution, brightness, etc.)

In yet another embodiment, a mobile device may be configured to receive content from a content provider. The content may be a single file that the content provider divided into segments (or sections, portions, parts, tiles, etc.) The content provider may choose not to DRM encode certain segments while other segments may be DRM encoded. Some of the segments can be replaced with alternate segments that are DRM protected. If the user of the device wishes to use the alternate DRM protected segments, then the device retrieves the DRM permission from the sender. To speed up retrieval of DRM permission, the DRM permission may be bundled with the content, so that the device can immediately access the permission while simultaneously providing information, such as payment information, to the content provider.

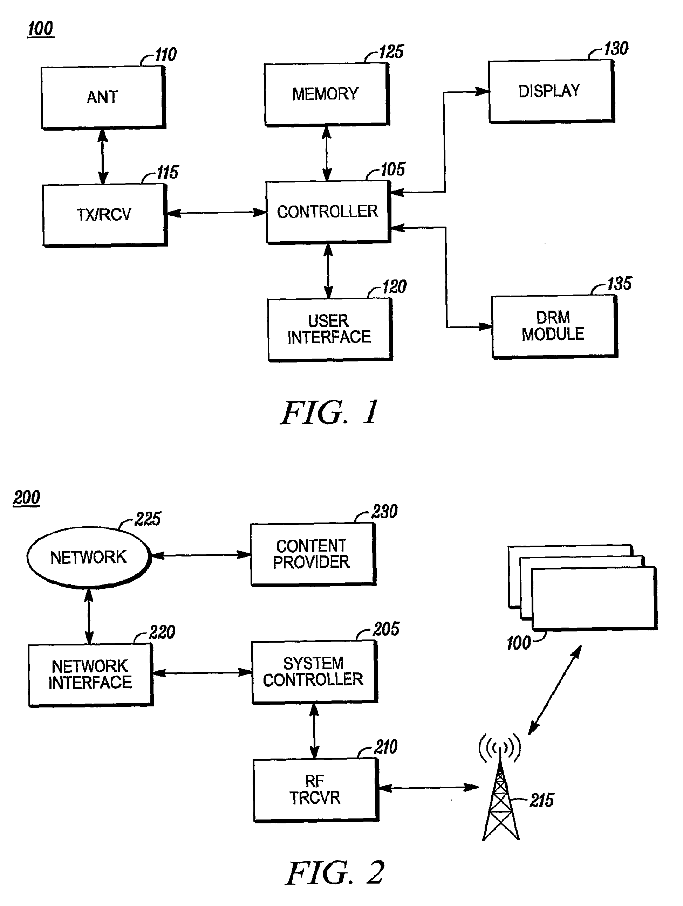

FIG. 1 illustrates a block diagram of an exemplary communication device 100 where an embodiment may be practiced. It should be readily apparent to those of ordinary skill in the art that the communication device 100 depicted in FIG. 1 represents a generalized schematic illustration and that other components may be added or existing components may be removed or modified. Moreover, the communication device 100 may be implemented using software components, hardware components, or combinations thereof.

As shown in FIG. 1, the communication device 100 includes a controller 105, an antenna 110 (labeled as "ANT"), a transceiver 115 (labeled as "TX/RCV"), a user interface module 120, a memory 125, a display module 130 and a digital rights management module 135 (labeled as "DRM module").

Although FIG. 1 depicts a communication device 100 as a specific device, it should be readily apparent to those of ordinary skill in the art that the communication device may be any device that can communicate with other devices using wireless communication such as radio frequency, infrared, wireless signals over a network or other similar techniques. In certain embodiments, the communication device may be implemented a cellular telephone, a personal digital assistant ("PDA"), laptop computers and other similar portable computing devices.

Returning to FIG. 1, the controller 105 may be configured to provide the functionality of the communication device 100. More particularly, the controller 105 may execute an operating system and/or software programs that provide the functionality for the communication device 100. The controller 105 may be implemented using a microprocessor, a digital signal processor, application specific integrated circuit or other similar computing platform.

The controller 105 may also be configured to interface with the transceiver 115. The transceiver 115 may be configured to convert data (e.g., voice, video, audio, etc) between a wireless protocol and the native format of the controller 105. The wireless protocol may be implemented using Wireless Personal Area Networks (e.g., Bluetooth, HomeRF, IEEE 802.15.3 protocols or other similar protocols), Wireless Local Area Networks (e.g., Hiperlan 2, IEEE 802.11x, or other similar protocols), WiFi, Cellular Digital Packet Data, Mobitex, Wireless Application Protocol, Global System for Mobiles, or other similar wireless protocol for communicating audio, voice, data and/or video.

The transceiver 115 may be configured to interface with the antenna 110. The antenna 110 may be configured to provide a communication channel between the communication device 100 and a service provider. More particular, the antenna 110 may be configured to receive and transmit radio frequency signals. The service provider may be a cellular telephone provider, a WIFI hotspot, an ad hoc network or other similar network.

The controller 105 may be further configured to interface with the user interface 120. The user interface 120 may be configured to provide a mechanism for a user of the communication device 100 to interact thereof. In some embodiments, the user interface 120 may be Bell keypad or a QWERTY keyboard. In other embodiments, the user interface 120 may be integrated with the display 120. More particularly, the display 120 may be a touch screen where the controller 105 executes software that permits a user to interact with the communication device 100 using a stylus or other similar device.

The controller 105 may be further configured to interface the memory 125. The memory 125 may be configured to store the operating system, application software programs and data entered by the user. The memory 125 may be implemented using persistent memory (e.g., flash memory, EEPROM, etc), non-persistent memory (e.g., RAM) or combinations thereof.

The display 130 may be configured to interface with the controller 105. The display 130 may also be configured to provide a visual interface for the operation of the communication device 100. The display 130 may be implemented using a liquid crystal display matrix, a thin film transistor array or a similar display technology.

The controller 105 may be further configured to interface with the DRM module 135. The DRM module 135 may be configured to provide DRM services for the communication device 100. For example, the DRM module 135 may be configured to determine whether any received content is DRM protected. The DRM module 135 may also be configured to maintain a database of DRM permissions (or licenses) for content received by the communication device 100.

FIG. 2 illustrates a system 200 where another embodiment may be practiced. It should be readily apparent to those of ordinary skill in the art that the system 200 depicted in FIG. 2 represents a generalized schematic illustration and that other components may be added or existing components may be removed or modified. Moreover, the system 200 may be implemented using software components, hardware components, or combinations thereof.

As shown in FIG. 2, the system 200 includes a system controller 205, a RF transceiver 210 ("labeled RF TRCVR"), antennas 215, and a network interface 220. The system controller 205 may be configured to interface with the RF transceiver 210 to communicate with the communication devices 100. The system controller 205 may function utilizing any wireless RF channel, for example, a one- or two-way pager channel, a mobile cellular channel, or a mobile radio channel.

The system controller 205 may include a subscriber database (not shown). The subscriber database provides information related to the communication device 100 as the communication device 100 enters the cell site of the antenna 215. The system controller 205 may also be configured to interface with a network interface 225. The network interface 225 may be configured to provide a communication channel to a network 225. The network 225 may be a public switch telephone network, local area networks, wide area networks (such as the Internet) or a combination thereof.

The system controller 205 may be further configured to interface with a content provider 230. The content provider 230 may be configured to provide content and/or services for the communication device 100. For example, the communication device 100 may be an Internet capable device. As such, the content provider 230 may be the information portal to the Internet for the communication device 100. As another example, the content provider may also provide DRM protected content to the communication device 100. The content provider 230 may be further configured to provide DRM licenses for those users requesting the same. This may be implemented using a message-based system.

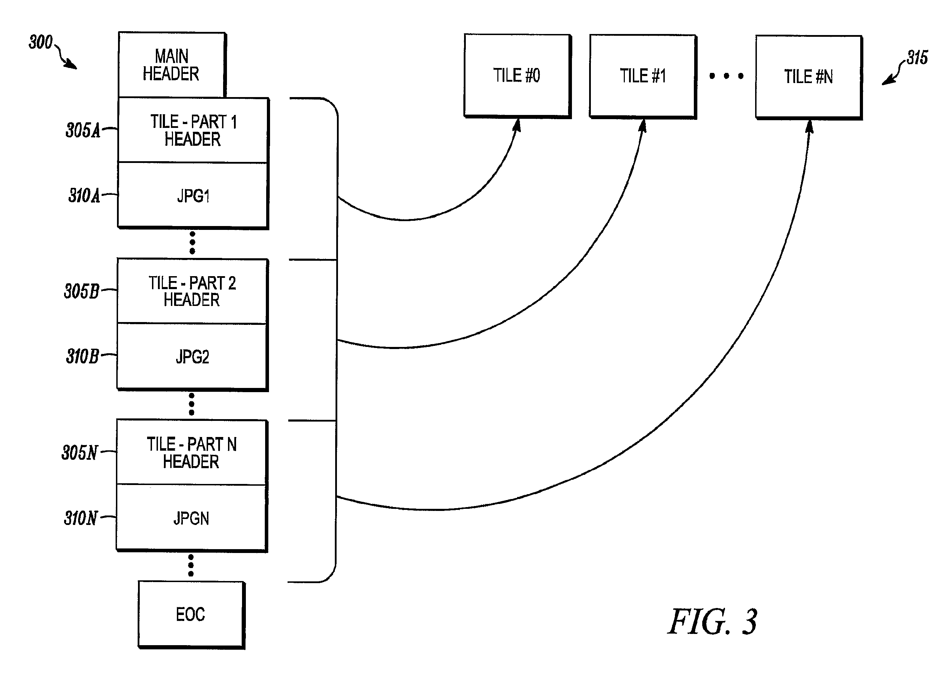

FIG. 3 illustrates an exemplary structure of content in accordance with yet another embodiment. As shown in FIG. 3, the content may be an image file 300 in the JPEG 2000 format. Accordingly to the JPEG 2000 specification, an image file may be partitioned into tiles (sections, segments or portions) 300A-N. Each tile may also be encoded individually and packaged as header 305A-N and associated image data 310A-N. The information contained in the header (or metadata) may be used to identify the section of the file that a permission may be requested for, i.e., identifier information or data. For example, tile 300A may be encoded with a different resolution than tile 300B. When the associated keys (licenses or permissions) are applied to the respective tiles from the identifier information of the metadata, the original image may be recreated. In other embodiments, the identifier information of the metadata may include the DRM permission for an encoded DRM tile. Accordingly, the user may have convenient access to the underlying data in the DRM encoded tile without waiting for the request for DRM permission to transact between the user and the content provider.

The identifier information of the metadata may also contain reference (indirectly or directly) to alternate segments. In certain embodiments, the content provider may have created DRM encoded alternate sections for a selected section of a file. The content provider may package the un-coded sections with the alternate sections of the file as the content and forward to the user when requested. Accordingly, a user may select a DRM encoded alternate section of the file when prompted by the user.

In some embodiments, the sections of an image file may be differentially DRM encoded by a content provider. As a result, a user may retrieve a select key for a user-specified tile of the image file because the user may be interested in one section of the image file. The user may retrieve multiple keys for multiple sections of the image file depending on the interest of viewing more sections of the image file.

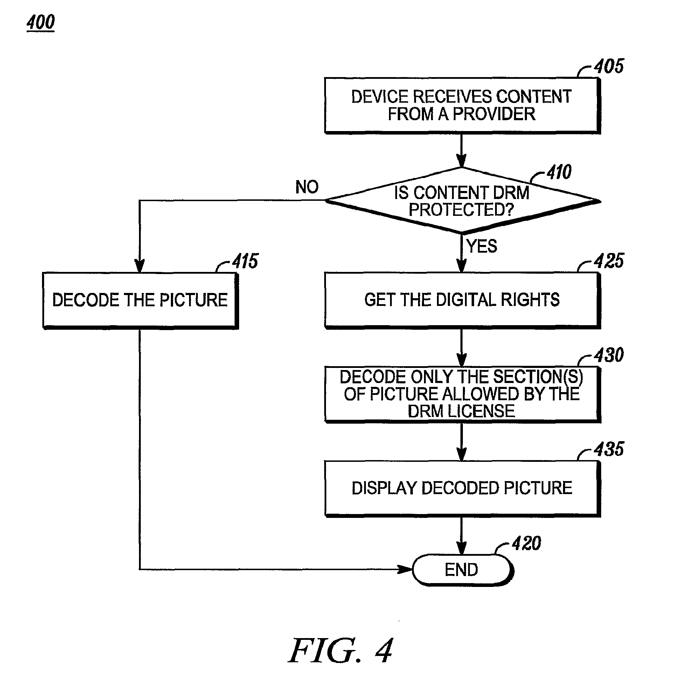

FIG. 4 illustrates a flow diagram 400 implemented by yet another embodiment. It should be readily apparent to those of ordinary skill in the art that the flow diagram 400 depicted in FIG. 4 represents a generalized schematic illustration and that other steps may be added or existing steps may be removed or modified.

As shown in FIG. 4, the controller 105 may be configured to be invoked when content from a content provide arrives through the transceiver 115, in step 405. The controller 105 may temporarily store the received content in the memory 125.

In some embodiments, the functionality embodied in FIG. 4 may be implemented as a computer program application. As a result, the computer program application can be invoked in response to an event, e.g., the arrival of content. In other embodiments, the functionality embodied in FIG. 4 may be implemented on a hardware platform such as an application specific integrated circuit, PROM, etc. For those skilled in the art, a hardware implementation of FIG. 4 may be configured to be in an idle state until invoked by the arrival of content.

In step 410, the controller 105 may be configured to determine whether the received content is DRM protected. More particularly, the controller 105 may be configured to examine the metadata (e.g., the header) associated with the received content. The metadata may contain the data that describes the DRM protections for the content. If the controller 105 determines that the received content is not DRM protected or the user already has permission for the received content, the controller 105 may display the received content on the display 105, in step 415. Subsequently, in step 420, the controller 105 may terminate processing and return to an idle state.

Returning to step 410, if the controller 105 determines that the received content is DRM protected, the controller 105 may be configured to retrieve the required DRM licenses (or permissions) associated with the received content, in step 425. For example, the controller 105 may generate a message to the content provider requesting the requisite licenses.

In step 430, the controller 105 may be configured to apply the received DRM permissions from the content provider to the received content stored in memory 125. More particularly, the DRM module 135 may be configured to apply the received DRM permissions to the received content to unlock the received content. In some embodiments, the received content may be encoded with the multiple levels of permissions. For example, a portion of the received content may have multiple permissions. If a user retrieves a first level DRM permission, the portion of the received content may be displayed at a first level resolution or other image property. If a user retrieves another level DRM permission, the portion of the received content may be displayed at a higher level resolution or other image property.

In step 435, the controller 105 may be configured to display the received content. More particularly, the controller 105 may forward the received DRM permissions to the DRM module 135. The DRM module 135 may then apply the DRM permissions to the received content to unlock the additional data associated with the DRM permissions. Subsequently, the controller 105 may go to the processing of step 420.

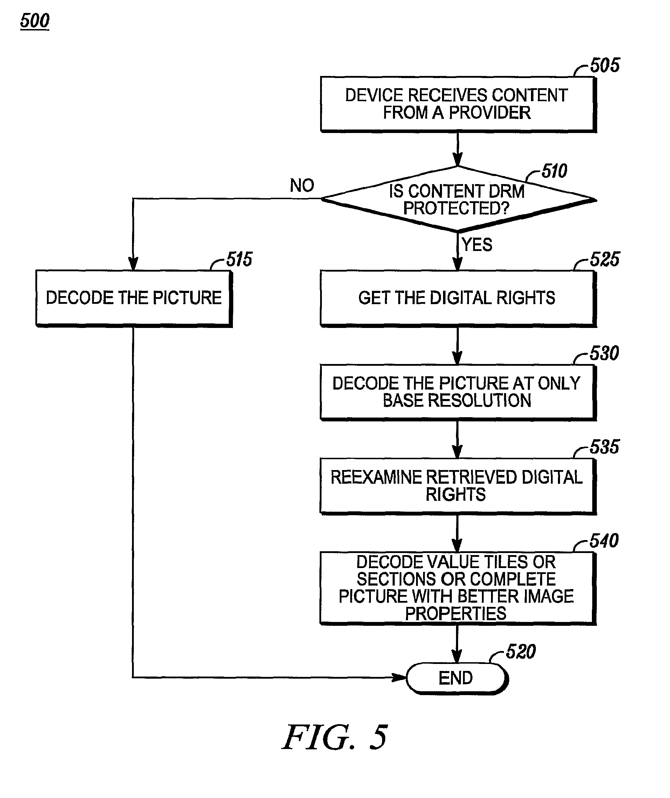

FIG. 5 illustrates a flow diagram 500 implemented by yet another embodiment. It should be readily apparent to those of ordinary skill in the art that the flow diagram 500 depicted in FIG. 5 represents a generalized schematic illustration and that other steps may be added or existing steps may be removed or modified.

As shown in FIG. 5, the controller 105 may be configured to be invoked when content from a content provide arrives through the transceiver 115, in step 505. The controller 105 may temporarily store the received content in the memory 125.

In some embodiments, the functionality embodied in FIG. 5 may be implemented as a computer program application. As a result, the computer program application can be invoked in response to an event, e.g., the arrival of content. In other embodiments, the functionality embodied in FIG. 5 may be implemented on a hardware platform such as an application specific integrated circuit, PROM, etc. For those skilled in the art, a hardware implementation of FIG. 5 may be configured to be in an idle state until invoked by the arrival of content.

In step 510, the controller 105 may be configured to determine whether the received content is DRM protected. More particularly, the controller 105 may be configured to examine the metadata associated with the received content. The metadata may contain the data that describes the DRM protections for the content. If the controller 105 determines that the received content is not DRM protected or the user already has permission for the received content, the controller 105 may display the received content on the display 105, in step 515. Subsequently, in step 520, the controller 105 may terminate processing and return to an idle state.

Returning to step 510, if the controller 105 determines that the received content is DRM protected, the controller 105 may be configured to retrieve the required DRM licenses (or permissions) associated with the DRM encoded portions of the received content, in step 525. For example, the controller 105 may generate a message to the content provider requesting the requisite licenses.

In step 530, the controller 105 may be configured to display at the received content at the resolution available as set by the associated DRM licenses.

In step 535, the controller 105 may be configured to examine the received DRM permissions from the content provider to the received content stored in memory 125. More particularly, the DRM module 135 may be configured to apply the received DRM permissions to the received content to unlock the received content. In some embodiments, the received content may be encoded with the multiple levels of permissions. For example, a portion of the received content may have multiple permissions. If a user retrieves a first level DRM permission, the portion of the received content may be displayed at a first level resolution or other image property. If a user retrieves another level DRM permission, the portion of the received content may be displayed at a higher level resolution or other image property.

In step 540, the controller 105 may be configured to display the received content. More particularly, the controller 105 may forward the received DRM permissions to the DRM module 135. The DRM module 135 may then apply the DRM permissions to the received content to unlock the additional data associated with the DRM permissions. Subsequently, the controller 105 may go to the processing of step 520.

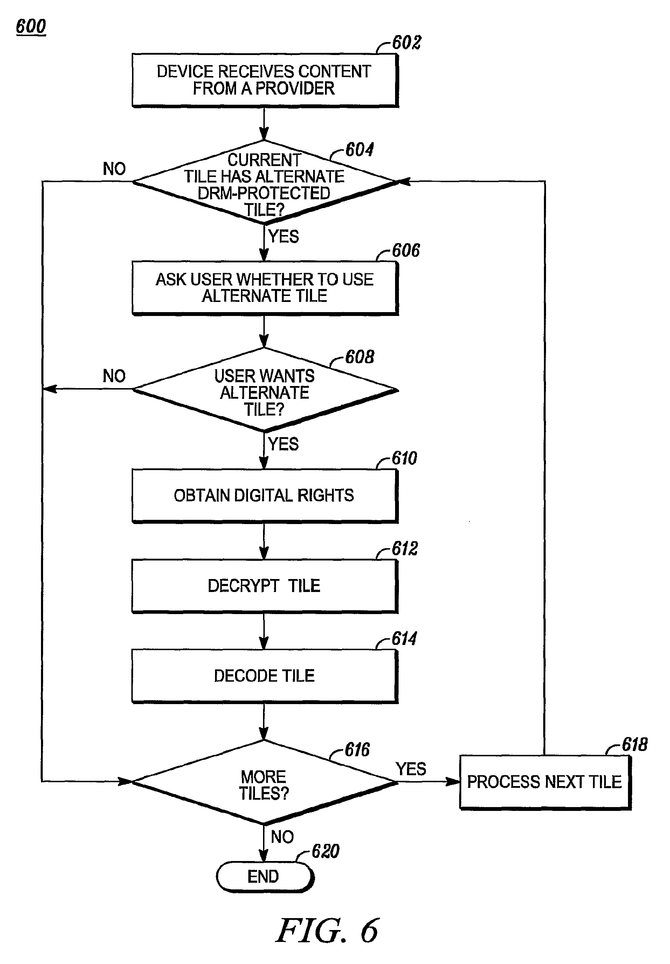

FIG. 6 illustrates a flow diagram 600 implemented by yet another embodiment. It should be readily apparent to those of ordinary skill in the art that the flow diagram 600 depicted in FIG. 6 represents a generalized schematic illustration and that other steps may be added or existing steps may be removed or modified.

As shown in FIG. 6, the controller 105 may be configured to be invoked when content from a content provide arrives through the transceiver 115, in step 602. The controller 105 may temporarily store the received content in the memory 125.

In some embodiments, the functionality embodied in FIG. 6 may be implemented as a computer program application. As a result, the computer program application can be invoked in response to an event, e.g., the arrival of content. In other embodiments, the functionality embodied in FIG. 6 may be implemented on a hardware platform such as an application specific integrated circuit, PROM, etc. For those skilled in the art, a hardware implementation of FIG. 6 may be configured to be in an idle state until invoked by the arrival of content.

In step 604, the controller 105 may be configured to examine a current segment or tile to determine whether the current tile (or segment) can be replaced with an alternate tile (or segment) that is DRM protected. More particularly, the controller 105 may be configured to examine the metadata associated with the received content. The metadata may contain the data that describes alternate segments or tiles associated with the current segment or may describe the DRM protections for the alternate tiles. If the controller 105 determines that the current tile has no alternate tile or the user already has permission for a tile, the controller 105 may display the current tile on the display 105, in step 614. Subsequently, in step 616, the controller 105 determines whether there are additional tiles subsequent to the current tile in the received content. Upon determining that there are such additional tiles, the controller 105 processes each additional tile in order starting with the current tile in step 618 and applies step 604 to each additional tile in order starting with the current.

Returning to step 616, if the controller 105 determines that there are no additional beyond the current tile, the controller 105 may terminate processing and return to an idle state in step 620.

Returning to step 604, if the controller 105 determines that the current tile can be replaced with at least one alternate tile that is DRM protected, the controller 105 may be configured to query the user of the device 100 via display 130 in step 606 as to whether the user wants to use the at least one alternate tile.

In step 608, if the user does not want to use the at least one alternate tile, then the user informs controller 105 via user interface 120 that the user does not want to use the at least one alternate tile. The controller 105 may then display the current tile on the display 105, in step 614.

Returning to step 608, if the user wants to use the at least one alternate tile, then the user informs controller 105 via user interface 120 that the user wants to use the at least one alternate segment or tile. The controller 105 may then retrieve the required DRM licenses (or permissions) associated with the received content, in step 610. For example, the controller 105 may generate a message to the content provider requesting the requisite licenses. Alternatively, to speed up retrieval of DRM permissions, the DRM permission may be bundled with the content in device memory 125, so that the controller 105 can immediately transfer the DRM permission from memory 125 to DRM module 135 while simultaneously generating a message to the content provider providing information, such as payment information. This alternative retrieval method for DRM permission follows the pay-per-view model common in cable systems.

In step 612, the controller 105 may be configured to examine the received DRM permissions from the content provider to the received content stored in memory 125. More particularly, the controller 105 may forward the received DRM permissions to the DRM module 135. The DRM module 135 may be configured to apply the received DRM permissions to the alternate tile to unlock the alternate tile. The controller 105 may replace the current tile with the alternate tile after the DRM module 135 unlocks the alternate tile. Subsequently, the controller 105 may go to the processing of step 614.

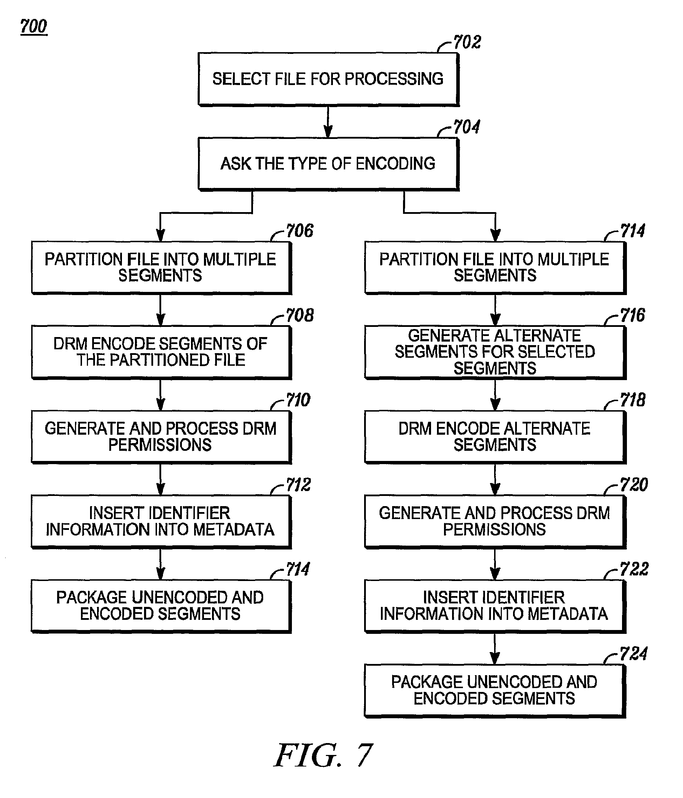

FIG. 7 illustrates a flow diagram 700 implemented by yet another embodiment. It should be readily apparent to those of ordinary skill in the art that the flow diagram 700 depicted in FIG. 7 represents a generalized schematic illustration and that other steps may be added or existing steps may be removed or modified.

In some embodiments, the functionality embodied in FIG. 7 may be implemented as a computer program application. In other embodiments, the functionality embodied in FIG. 7 may be implemented on a hardware platform such as an application specific integrated circuit, PROM, etc. For those skilled in the art, a hardware implementation of FIG. 7 may be configured to be in an idle state until invoked by the arrival of a file.

As shown in FIG. 7, a content provider may select a file for processing, in step 702. In some embodiments, a selected file may be an image file. The content provider may be prompted to determine the type of encoding for the selected file, in step 704. This may be implemented as a dialog box with providing the encoding options. Although FIG. 7 depicts two encoding schemes, it should readily obvious that other types of encoding schemes may be implemented without departing from the scope of the claimed inventions.

When the content provider selects an option of embedded DRM encoding, i.e., the content contains un-encoded and DRM-encoded segments (partitions, parts, sections, tiles), the selected file may be partition into multiple segments, in step 706. In some embodiments, the selected file may be segmented according to JPEG2000 specification.

In step 708, the content provider may select the segments of the segmented file to be DRM encoded. The selected segments may be DRM encoded the same, DRM-encoded differently from one another, or some other arrangement. As the segments are encoded, associated DRM permissions (licenses, keys, etc.) may also be generated in step 710. The DRM permissions may be stored with at the content provider with a link to the appropriate DRM permission included in the identifier information for the selected segment, in step 712. In other embodiments, the DRM permission may be included in the identifier information in the metadata for the selected segment. In step 714, the content provider may package the un-encoded and DRM encoded segments as the content for delivery to users (or subscribers).

Returning to step 704, when the content provider selects an alternate segment encoding, the selected file is partitioned into multiple segments, in step 714 (similar to step 706). The user, in step 716, may create a subset of segments from the segmented file. For each segment, one or more alternate segments may be generated.

In step 718, the alternate segments may be DRM encoded the same, DRM-encoded differently from one another, or some other arrangement. As the segments are encoded, associated DRM permissions (licenses, keys, etc.) may also be generated in step 720. The DRM permissions may be stored with at the content provider with a link to the appropriate DRM permission included in the identifier information for the selected segment, in step 722. In other embodiments, the DRM permission may be included in the identifier information in the metadata for the selected segment. In step 724, the content provider may package the un-encoded and DRM encoded alternate segments as the content for delivery to users (or subscribers).

Certain embodiments may be performed as a computer program. The computer program may exist in a variety of forms both active and inactive. For example, the computer program can exist as software program(s) comprised of program instructions in source code, object code, executable code or other formats; finmware program(s); or hardware description language (HDL) files. Any of the above can be embodied on a computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the present invention can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While the invention has been described with reference to the exemplary embodiments thereof, those skilled in the art will be able to make various modifications to the described embodiments without departing from the true spirit and scope. The terms and descriptions used herein arc set forth by way of illustration only and are not meant as limitations. In particular, although the method has been described by examples, the steps of the method may be performed in a different order than illustrated or simultaneously. Those skilled in the art will recognize that these and other variations are possible within the scope of the invention as defined in the following claims.

## Claims

1. A method of managing content in a mobile wireless communication device (100), the method comprising:
receiving (405, 505, 602) at a transceiver (115) of the mobile wireless communication device content from a provider, wherein the content comprises at least one file segmented into a plurality of segments including at least one segment being encoded with a digital rights management, DRM, technique and at least one unencoded segment that is not DRM encoded, wherein the received content further includes at least one alternate segment, at least one segment of the plurality of segments being associated with at least one alternate segment, each alternate segment being encoded with a least one DRM technique;
determining (410, 510) a DRM status of each segment of the plurality of segments by examining metadata associated with the received content;
retrieving (425, 525) a DRM permission provided by the provider (230) in response to the at least one segment being encoded by a DRM technique;
applying (430, 535) the DRM permission to the at least one encoded segment of the content;
examining (604) a current segment of the received content to determine whether the current segment can be replaced with an alternate segment that is DRM protected;
when determining that the current segment has no alternate segment or a user has permission for the current segment, displaying (614) the current segment;
when determining that the current segment can be replaced with at least one alternate segment that is DRM protected, for each of the segments where it has been determined that it can be replaced with at least one alternate segment performing the following:
querying (606) the user of the device as to whether the user wants to use the at least one alternate segment;
when the user wants to use the at least one alternate segment, retrieving (610) the DRM permission associated with the received content and applying the DRM permission to the at least one alternate segment; and
replacing the current segment with the at least one alternate segment such that the at least one alternate segment is displayed.

2. The method of claim 1, further comprising displaying the segments of the content that are not DRM encoded.

3. The method of claim 1, further comprising segmenting the at least one file according to JPEG20000.

4. The method of claim 3, wherein the content is an image file.

5. The method of claim 1, wherein the at least one encoded segment comprises an identifier.

6. The method of claim 5, further comprising:
forming a message requesting the DRM permission for the respective at least one encoded segment, wherein the message includes the identifier for the at least one encoded segment; and
transmitting the message over a network (225), wherein the network comprises a wireless portion.

7. The method of claim 6, further comprising:
receiving the message at the provider (230); and
obtaining the DRM permission in response to the identifier of the at least one encoded segment.

8. The method of claim 7, further comprising:
forming a second message that includes the DRM permission for the at least one encoded segment; and
transmitting the second message.

9. The method of claim 1, wherein displaying the current segment comprises displaying the current segment at a base resolution.

10. The method of claim 1, wherein the DRM permission allows the user to modify at least one image property.

11. The method of claim 10, wherein the at least one image property includes one of resolution, brightness, contrast, region of interest, and bit-depth.

12. The method of claim 1, wherein metadata associated with the received content includes data that describes whether a segment is associated with at least one alternate segment.

13. A mobile wireless communication device (100) comprising:
a display (130) configured to display image files;
a network interface (110, 115), including a transceiver (115), configured to interface with a wireless network;
a digital rights management, DRM module (135) configured to manage digital rights associated with content received at the transceiver (115) of the mobile device, wherein the content comprises at least one file partitioned into a plurality of segments including at least one segment being encoded with a digital rights management, DRM, technique and at least one unencoded segment that is not DRM encoded, wherein the received content further includes at least one alternate segment, at least one segment of the plurality of segments is associated with at least one alternate segment, each alternate segment encoded with at least one DRM technique; and
a controller (105) configured to interface with the display (130), network interface (110, 115), and the DRM module (135), wherein the controller (105) is also configured to determine DRM status of each segment of the plurality of segments by examining metadata associated with the received content by using the DRM module (135), to retrieve a DRM permission for at least one segment of the content being encoded by a DRM technique through the network interface (110, 115), and to apply the DRM permission to the at least one segment of the content using the DRM module (135),
wherein the controller (105) is further configured to:
examine a current segment of the received content to determine whether the current segment can be replaced with an alternate segment that is DRM protected;
when determining that the current segment has no alternate segment or a user has permission for the current segment, display the current segment;
when determining that the current segment can be replaced with at least one alternate segment that is DRM protected, for each of the segments where it has been determined that it can be replaced with at least one alternate segment performing the following:
query the user of the device as to whether the user wants to use the at least one alternate segment;
when the user wants to use the at least one alternate segment, retrieve the DRM permission associated with the received content and apply the DRM permission to the at least one alternate segment; and
replace the current segment with the at least one alternate segment and display the at least one alternate segment on the display (130).

14. The mobile wireless communication device according to claim 13, further comprising a memory (125) configured to interface with the controller (105) and to store the received content.

15. The mobile wireless communication device according to claim 13, wherein the controller (105) is configured to form a message requesting the DRM permission and transmitting the message through the network interface (110, 115) to a content provider (230).

16. The mobile wireless communication device according to claim 13, wherein the DRM permission allows the user to modify at least one image property.

17. The mobile wireless communication device according to claim 16, wherein the at least one image property includes one of resolution, brightness, contrast, region of interest, and bit-depth.

18. The mobile wireless communication device according to claim 13, wherein metadata associated with the received content includes data that describes whether a segment is associated with at least one alternate segment.

## Patentansprüche

1. Verfahren zum Verwalten von Inhalt in einer mobilen drahtlosen Kommunikationsvorrichtung (100), wobei das Verfahren Folgendes aufweist:
Empfangen (405, 505, 602) an einem Sendeempfänger (115) der mobilen drahtlosen Kommunikationsvorrichtung von Inhalt von einem Anbieter, wobei der Inhalt wenigstens eine Datei aufweist, die in eine Mehrzahl von Segmenten segmentiert ist, die wenigstens ein Segment aufweist, das mit einer Technik zur Verwaltung digitaler Rechte (DRM) codiert ist, und wenigstens ein nicht codiertes Segment, das nicht DRM-codiert ist, wobei der empfangene Inhalt ferner wenigstens ein alternierendes Segment aufweist, wobei wenigstens ein Segment aus der Mehrzahl von Segmenten wenigstens einem alternierenden Segment zugehörig ist, wobei jedes alternierende Segment mittels wenigstens einer DRM-Technik codiert ist;
Bestimmen (410, 510) eines DRM-Status eines jeden Segments aus der Mehrzahl von Segmenten durch Überprüfung von Metadaten, die dem empfangenen Inhalt zugehörig sind;
Abrufen (425, 525) einer DRM-Erlaubnis, die von dem Anbieter (230) bereitgestellt wird, ansprechend auf das wenigstens eine Segment, das mittels einer DRM-Technik codiert ist;
Anwenden (430, 535) der DRM-Erlaubnis auf das wenigstens eine codierte Segment des Inhalts;
Überprüfen (604) eines aktuellen Segments des empfangenen Inhalts, um zu bestimmen, ob das aktuelle Segment durch ein alternierendes Segment ersetzt werden kann, das DRM-geschützt ist;
wenn bestimmt wird, dass das aktuelle Segment kein alternierendes Segment aufweist oder ein Nutzer eine Erlaubnis für das aktuelle Segment hat, Anzeigen (614) des aktuellen Segments;
wenn bestimmt wird, dass das aktuelle Segment durch wenigstens ein alternierendes Segment, das DRM-geschützt ist, ersetzt werden kann, Durchführen für jedes der Segmente, für welches bestimmt wurde, das es durch wenigstens ein alternierendes Segment ersetzt werden kann, von Folgendem:
Anfragen (606) beim Nutzer der Vorrichtung, ob der Nutzer das wenigstens eine alternierende Segment verwenden möchte;
wenn der Nutzer das wenigstens eine alternierende Segment verwenden möchte, Abrufen (610) der DRM-Erlaubnis, die dem empfangenen Inhalt zugehörig ist, und Anwenden der DRM-Erlaubnis auf das wenigstens eine alternierende Segment; und
Ersetzen des aktuellen Segments durch das wenigstens eine alternierende Segment, so dass das wenigstens eine alternierende Segment angezeigt wird.

2. Verfahren nach Anspruch 1, das ferner ein Anzeigen der Segmente des Inhalts aufweist, die nicht DRM-codiert sind.

3. Verfahren nach Anspruch 1, das ferner ein Segmentieren der wenigstens einen Datei nach JPEG20000 aufweist.

4. Verfahren nach Anspruch 3, wobei der Inhalt eine Bilddatei ist.

5. Verfahren nach Anspruch 1, wobei das wenigstens eine codierte Segment eine Kennung aufweist.

6. Verfahren nach Anspruch 5, das ferner Folgendes aufweist:
Bilden einer Nachricht, die die DRM-Erlaubnis für das entsprechende wenigstens eine codierte Segment anfordert, wobei die Nachricht die Kennung für das wenigstens eine codierte Segment aufweist; und
Übertragen der Nachricht über ein Netz (225), wobei das Netz einen drahtlosen Abschnitt aufweist.

7. Verfahren nach Anspruch 6, das ferner Folgendes aufweist:
Empfangen der Nachricht am Anbieter (230); und
Erhalten der DRM-Erlaubnis ansprechend auf die Kennung des wenigstens einen codierten Segments.

8. Verfahren nach Anspruch 7, das ferner Folgendes aufweist:
Bilden einer zweiten Nachricht, die die DRM-Erlaubnis für das wenigstens eine codierte Segment aufweist; und
Übertragen der zweiten Nachricht.

9. Verfahren nach Anspruch 1, wobei das Anzeigen des aktuellen Segments ein Anzeigen des aktuellen Segments bei einer Grund-Auflösung aufweist.

10. Verfahren nach Anspruch 1, wobei die DRM-Erlaubnis dem Nutzer ermöglicht, wenigstens eine Bildeigenschaft zu modifizieren.

11. Verfahren nach Anspruch 10, wobei die wenigstens eine Bildeigenschaft entweder Auflösung, Helligkeit, Kontrast, Bereich von Interesse oder Bit-Tiefe aufweist.

12. Verfahren nach Anspruch 1, wobei dem empfangenen Inhalt zugehörige Metadaten Daten aufweisen, die beschreiben, ob ein Segment wenigstens einem alternierenden Segment zugehörig ist.

13. Mobile drahtlose Kommunikationsvorrichtung (100), die Folgendes aufweist:
eine Anzeige (130), die zum Anzeigen von Bilddateien ausgelegt ist;
eine Netz-Schnittstelle (110, 115), die einen Sendeempfänger (115) aufweist und zur Bildung einer Schnittstelle mit einem drahtlosen Netz ausgelegt ist;
ein DRM-Modul (135) zur Verwaltung digitaler Rechte, das zur Verwaltung digitaler Rechte, die einem Inhalt zugehörig sind, der an dem Sendeempfänger (115) der mobilen Vorrichtung empfangen wird, ausgelegt ist, wobei der Inhalt wenigstens eine Datei aufweist, die in eine Mehrzahl von Segmenten unterteilt ist, die wenigstens ein Segment aufweist, das mittels einer Technik zur Verwaltung digitaler Rechte (DRM) codiert ist, und wenigstens ein nicht codiertes Segment, das nicht DRM-codiert ist, wobei der empfangene Inhalt ferner wenigstens ein alternierendes Segment aufweist, wobei wenigstens ein Segment aus der Mehrzahl von Segmenten wenigstens einem alternierenden Segment zugehörig ist, wobei jedes alternierende Segment mittels wenigstens einer DRM-Technik codiert ist; und
eine Steuerung (105), die zur Bildung einer Schnittstelle mit der Anzeige (130), der Netz-Schnittstelle (110 ,115) und dem DRM-Modul (135) ausgelegt ist, wobei die Steuerung (105) auch dazu ausgelegt ist, den DRM-Status eines jeden Segments aus der Mehrzahl von Segmenten durch Überprüfung von Metadaten, die dem empfangenen Inhalt zugehörig sind, unter Verwendung des DRM-Moduls (135) zu bestimmen, eine DRM-Erlaubnis für wenigstens ein Segment des Inhalts abzurufen, das mittels einer DRM-Technik über die Netz-Schnittstelle (110, 115) codiert ist, und die DRM-Erlaubnis auf das wenigstens eine Segment des Inhalts unter Verwendung des DRM-Moduls (135) anzuwenden,
wobei die Steuerung (105) ferner zu Folgendem ausgestaltet ist:
Überprüfen eines aktuellen Segments des empfangenen Inhalts, um zu bestimmen, ob das aktuelle Segment durch ein alternierendes Segment ersetzt werden kann, das DRM-geschützt ist;
wenn bestimmt wird, dass das aktuelle Segment kein alternierendes Segment aufweist oder ein Nutzer eine Erlaubnis für das aktuelle Segment hat, Anzeigen des aktuellen Segments;
wenn bestimmt wird, dass das aktuelle Segment durch wenigstens ein alternierendes Segment, das DRM-geschützt ist, ersetzt werden kann, Durchführen für jedes der Segmente, für welches bestimmt wurde, das es durch wenigstens ein alternierendes Segment ersetzt werden kann, von Folgendem:
Anfragen beim Nutzer der Vorrichtung, ob der Nutzer das wenigstens eine alternierende Segment verwenden möchte;
wenn der Nutzer das wenigstens eine alternierende Segment verwenden möchte, Abrufen der DRM-Erlaubnis, die dem empfangenen Inhalt zugehörig ist, und Anwenden der DRM-Erlaubnis auf das wenigstens eine alternierende Segment; und
Ersetzen des aktuellen Segments durch das wenigstens eine alternierende Segment und Anzeigen des wenigstens einen alternierenden Segments auf der Anzeige (130).

14. Mobile drahtlose Kommunikationsvorrichtung nach Anspruch 13, die ferner einen Speicher (125) aufweist, der zur Bildung einer Schnittstelle mit der Steuerung (105) und zum Speichern des empfangenen Inhalts ausgelegt ist.

15. Mobile drahtlose Kommunikationsvorrichtung nach Anspruch 13, wobei die Steuerung (105) zur Bildung einer Nachricht ausgelegt ist, die die DRM-Erlaubnis anfordert und die Nachricht durch die Netz-Schnittstelle (110, 115) an einen Inhaltsanbieter (230) überträgt.

16. Mobile drahtlose Kommunikationsvorrichtung nach Anspruch 13, wobei die DRM-Erlaubnis dem Nutzer ermöglicht, wenigstens eine Bildeigenschaft zu modifizieren.

17. Mobile drahtlose Kommunikationsvorrichtung nach Anspruch 16, wobei die wenigstens eine Bildeigenschaft entweder Auflösung, Helligkeit, Kontrast, Bereich von Interesse oder Bit-Tiefe aufweist.

18. Mobile drahtlose Kommunikationsvorrichtung nach Anspruch 13, wobei dem empfangenen Inhalt zugehörige Metadaten Daten aufweisen, die beschreiben, ob ein Segment wenigstens einem alternierenden Segment zugehörig ist.

## Revendications

1. Procédé de gestion du contenu dans un dispositif de communications sans fil mobile (100), le procédé comprenant :
recevoir (405, 505, 602) à un émetteur-récepteur (115) du dispositif de communications sans fil mobile du contenu d'un fournisseur, où le contenu comprend au moins un dossier segmenté en une pluralité de segments incluant au moins un segment codé avec une technique de gestion de droits numériques, DRM, et au moins un segment non codé qui n'est pas codé avec la DRM, où le contenu reçu comprend en outre au moins un segment alternatif, au moins un segment de la pluralité de segments étant associé à au moins un segment alternatif, chaque segment alternatif étant codé avec au moins une technique DRM ;
déterminer (410, 510) un statut DRM de chaque segment de la pluralité de segments en examinant des métadonnées associées au contenu reçu ;
extraire (425, 525) une autorisation DRM fournie par le fournisseur (230) en réponse à au moins un segment précité codé par une technique DRM ;
appliquer (430, 535) l'autorisation DRM à au moins un segment codé précité du contenu ;
examiner (604) un segment courant du contenu reçu pour déterminer si le segment courant peut être remplacé par un segment alternatif qui est protégé par la DRM ;
lors de la détermination que le segment courant n'a pas de segment alternatif ou qu'un utilisateur a une autorisation pour le segment courant, afficher (614) le segment courant ;
lors de la détermination que le segment courant peut être remplacé par au moins un segment alternatif qui est protégé par la DRM, pour chacun des segments, où il a été établi qu'il peut être remplacé par au moins un segment alternatif exécutant le suivant :
demander (606) à l'utilisateur du dispositif si l'utilisateur veut utiliser le au moins un segment alternatif ;
lorsque l'utilisateur veut utiliser le au moins un segment alternatif, extraire (610) l'autorisation de la DRM associée au contenu reçu et appliquer l'autorisation de la DRM à au moins un segment alternatif précité ; et
remplacer le segment courant par au moins un segment alternatif précité de telle sorte que le au moins un segment alternatif est affiché.

2. Procédé selon la revendication 1, comprenant en outre l'affichage des segments du contenu qui ne sont pas codés par la DRM.

3. Procédé selon la revendication 1, comprenant en outre la segmentation d'au moins un dossier précité en accord avec JPEG20000.

4. Procédé selon la revendication 3, dans lequel le contenu est un dossier d'images.

5. Procédé selon la revendication 1, dans lequel le au moins un segment codé comprend un identifiant.

6. Procédé selon la revendication 5, comprenant en outre :
former un message demandant l'autorisation DRM pour au moins un segment codé respectif précité, où le message comprend l'identifiant pour le au moins un segment codé ; et
transmettre le message par un réseau (225), où le réseau comprend une portion sans fil.

7. Procédé selon la revendication 6, comprenant en outre :
recevoir le message au fournisseur (230) ; et
obtenir l'autorisation DRM en réponse à l'identifiant d'au moins un segment codé précité.

8. Procédé selon la revendication 7, comprenant en outre :
former un deuxième message qui inclut l'autorisation DRM pour le au moins un segment codé ; et
transmettre de deuxième message.

9. Procédé selon la revendication 1, dans lequel l'affichage du segment courant comprend l'affichage du segment courant à une résolution de base.

10. Procédé selon la revendication 1, dans lequel l'autorisation DRM permet à l'utilisateur de modifier au moins une propriété de l'image.

11. Procédé selon la revendication 10, dans lequel la au moins une propriété de l'image inclut un parmi la résolution, la luminosité, le contraste, la région d'intérêt et la profondeur de bit.

12. Procédé selon la revendication 1, dans lequel les métadonnées associées au contenu reçu comprennent des données qui décrivent si un segment est associé à au moins un segment alternatif.

13. Dispositif de communication sans fil mobile (100) comprenant :
un écran d'affichage (130) configuré pour afficher des dossiers d'images ;
une interface réseau (110, 115) incluant un émetteur-récepteur (115), configurée pour être en interface avec un réseau sans fil ;
un module de gestion de droits numériques DRM (135) configuré pour gérer les droits numériques associés au contenu reçu à l'émetteur-récepteur (115) du dispositif mobile, où le contenu comprend au moins un dossier fragmenté en une pluralité de segments incluant au moins un segment codé avec une technique de gestion des droits numériques, DRM, et au moins un segment non codé qui n'est pas codé avec la DRM, où le contenu reçu comprend en outre au moins un segment alternatif, au moins un segment de la pluralité de segments est associé à au moins un segment alternatif, chaque segment alternatif étant codé avec au moins une technique DRM ; et
un dispositif de commande (105) configuré pour être en interface avec l'écran d'affichage (130), l'interface réseau (110, 115) et le module DRM (135), où le dispositif de commande (105) est également configuré pour déterminer le statut DRM de chaque segment de la pluralité de segments en examinant les métadonnées associées au contenu reçu en utilisant le module DRM (135), pour extraire une autorisation DRM pour au moins un segment du contenu codé par une technique DRM par l'interface réseau (110, 115), et pour appliquer l'autorisation DRM à au moins un segment précité du contenu en utilisant le module DRM (135),
où le dispositif de commande (105) est en outre configuré pour :
examiner un segment courant du contenu reçu pour déterminer si le segment courant peut être remplacé par un segment alternatif qui est protégé par la DRM ;
lors de la détermination que le segment courant n'a pas de segment alternatif ou qu'un utilisateur a l'autorisation pour le segment courant, afficher le segment courant ;
lors de la détermination que le segment courant peut être remplacé par au moins un segment alternatif qui est protégé par la DRM, pour chacun des segments, où il a été établi qu'il peut être remplacé par au moins un segment alternatif exécutant le suivant :
demander à l'utilisateur du dispositif si l'utilisateur veut utiliser le au moins un segment alternatif ;
lorsque l'utilisateur veut utiliser le au moins un segment alternatif, extraire l'autorisation DRM associée au contenu reçu et appliquer l'autorisation DRM audit au moins un segment alternatif ; et
remplacer le segment courant par ledit au moins un segment alternatif et afficher le au moins un segment alternatif sur l'écran d'affiche (130).

14. Dispositif de communications sans fil mobile selon la revendication 13, comprenant en outre une mémoire (125) configurée pour être en interface avec le dispositif de commande (105) et pour stocker le contenu reçu.

15. Dispositif de communication sans fil mobile selon la revendication 13, dans lequel le dispositif de commande (105) est configuré pour former un message demandant l'autorisation DRM et pour transmettre le message par l'interface réseau (110, 115) à un fournisseur de contenu (230).

16. Dispositif de communication sans fil mobile selon la revendication 13, dans lequel l'autorisation DRM permet à l'utilisateur de modifier au moins une propriété de l'image.

17. Dispositif de communication sans fil mobile selon la revendication 16, dans lequel ladite au moins une propriété de l'image comprend un parmi la résolution, la luminosité, le contraste, la région d'intérêt et la profondeur de bit.

18. Dispositif de communication sans fil mobile selon la revendication 13, dans lequel les métadonnées associées au contenu reçu comprennent des données qui décrivent si un segment est associé à au moins un segment alternatif.
